# EUROPEAN PATENT SPECIFICATION

(11) **EP 2 714 456 B1**
(45) Date of publication and mention of the grant of the patent: **02.08.2017**
(21) Application number: 12727704.4
(22) Date of filing: 29.05.2012
(51) Int. Cl.: B60K 37/06

(54) **SYSTEM AND METHOD FOR SELECTIVELY ALTERING CONTENT OF A VEHICLE INTERFACE**
SYSTEM UND VERFAHREN ZUM SELEKTIVEN ÄNDERN DES INHALTS EINER FAHRZEUGSCHNITTSTELLE
SYSTÈME ET PROCÉDÉ POUR ALTÉRER DE MANIÈRE SÉLECTIVE UN CONTENU D'UNE INTERFACE DE VÉHICULE

(30) Priority: 01.06.2011 US 201113150604
(43) Date of publication of application: 09.04.2014
(73) Proprietor: Johnson Controls Technology Company, Holland, MI 49423 (US)
(72) Inventor: MCGOUGH, Beth A., Holland, Michigan 49424 (US); LAMB, Tony M., Holland, Michigan 49424 (US)
(74) Representative: Wolff, Felix
(86) International application number: PCT/US2012/039824
(87) International publication number: WO 2012/166708

(56) References cited:
- WO-A1-2009/081781
- US-A1- 2008 129 684
- US-A1- 2010 259 375
- US-A1- 2011 288 724

## Description

### CROSS REFERENCE TO RELATED APPLICATION

This application claims priority from and the benefit of U.S. Application Serial No. 13/150,604, entitled "SYSTEM AND METHOD FOR SELECTIVELY ALTERING CONTENT OF A VEHICLE INTERFACE", filed June 1, 2011, which is hereby incorporated by reference in its entirety.

### BACKGROUND

The invention relates generally to a system and method for selectively altering content of a vehicle interface.

Certain vehicles include a variety of displays configured to convey information to a driver. For example, an instrument panel may include gauges and/or displays configured to present information related to vehicle speed, fuel quantity, fuel efficiency, oil temperature, oil pressure, coolant temperature and engine speed, among other parameters. Certain instrument panels also include graphical representations of the displayed information. For example, the instrument panel may include a display configured to present a graph of fuel efficiency as a function of time. In addition, the vehicle may include another display within a center console configured to present further graphical information to the driver. For example, the center console display may present information related to navigation, environmental controls and audio functions, among other information. Unfortunately, the complexity of the graphical content presented by the displays may direct driver focus away from the vehicle surrondings. The document US-A-20080129684 discloses the preamble of claims 1 and 13.

### BRIEF DESCRIPTION OF THE INVENTION

The present invention relates to a vehicle interface according to claim 1.

The present invention further relates to a method of operating a vehicle interface according to claim 13.

### DRAWINGS

FIG. 1 is a perspective view of an exemplary vehicle that may include an interface configured to selectively alter content in response to detected driver distraction.
FIG. 2 is a perspective view of a part of the interior of the vehicle of FIG. 1.
FIG. 3 is a block diagram of an embodiment of an interface that may be employed within the vehicle of FIG. 1.
FIG. 4 is a front view of an exemplary graphical display, presenting a first layout having a first content level.
FIG. 5 is a front view of the graphical display of FIG. 4, presenting a second layout having a second content level, less than the first content level.
FIG. 6 is a front view of an alternative graphical display, presenting a first layout having a first content level.
FIG. 7 is a front view of the graphical display of FIG. 6, presenting a second layout having a second content level, less than the first content level.
FIG. 8 is a flow diagram of an exemplary method of operating a vehicle interface.

### DETAILED DESCRIPTION

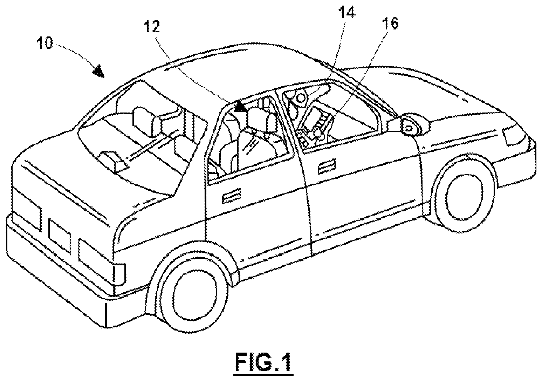

FIG. 1 is a perspective view of an exemplary vehicle 10 that may include an interface configured to selectively alter content in response to detected driver distraction. As illustrated, the vehicle 10 includes an interior 12 having an instrument panel 14 and a center console 16. As discussed in detail below, graphical displays within the instrument panel 14 and/or the center console 16 present graphical information to a driver regarding a variety of parameters associated with vehicle operation. Upon detection of driver distraction, a controller communicatively coupled to the graphical displays will alter content presented to the driver, thereby enabling the driver to focus on the vehicle surrounding (e.g., road conditions, approaching obstacles, etc.). For example, the controller may be configured to detect lane departure, an approaching object, driver eye closure, driver eye position, cell phone activation, erratic speed and/or interior noise level, for example. Once driver distraction is detected, the controller may remove elements of the graphical content and/or increase the font size of the textual content. As a result, information may be conveyed to the driver in a more concise/simplistic manner, thereby reducing driver focus on the displays and/or directing driver attention toward the vehicle surroundings. When the driver distraction is no longer detected, the controller may restore the content of the displays to the original level.

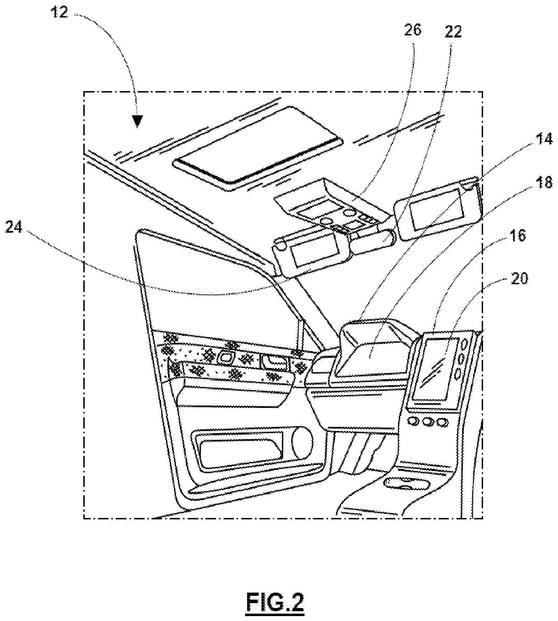

FIG. 2 is a perspective view of a part of the interior 12 of the vehicle 10 of Fig. 1. As illustrated, the instrument panel 14 includes a first graphical display 18, and the center console 16 includes a second graphical display 20. As discussed in detail below, each display 18 and 20 is configured to present graphical information associated with vehicle operation to the driver. Upon detection of driver distraction, a controller communicatively coupled to the displays will alter content presented to the driver, thereby enabling the driver to focus on road conditions. For example, the controller may be configured to remove graphical elements and/or increase the font size of the displayed content. In addition, the vehicle 10 may include a voice prompt configured to verbalize driving directions, traffic reports and/or text messages received by a cellular phone, for example. Similar to the graphical displays, the controller may be configured to alter content presented by the voice prompt (e.g., by providing shorter messages) in response to detection of driver distraction. While the illustrated interior 12 includes graphical displays within the instrument panel 14 and the center console 16, it should be appreciated that alternative embodiments may include graphical displays located within other components of the vehicle interior. For example, in certain embodiments, a graphical display may be disposed within a rearview mirror 22, a sun visor 24 and/or an overhead console 26. Such embodiments may also include a controller communicatively coupled to each display, and configured to alter content presented by the display in response to detection of driver distraction.

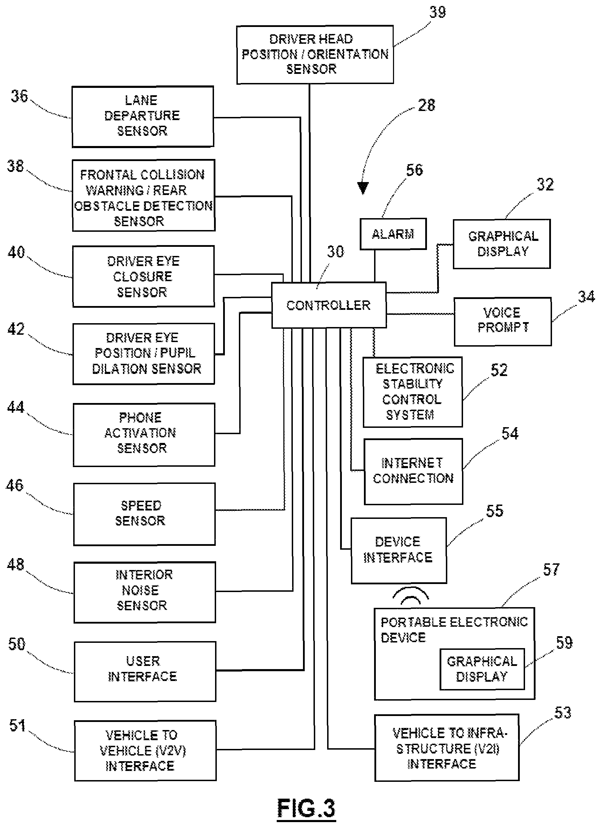

FIG. 3 is a block diagram of an embodiment of an interface 28 that may be employed within the vehicle 10 of Fig. 1. As illustrated, the interface 28 includes a controller 30 configured to selectively alter content presented by a graphical display 32. For example, the graphical display 32 may be an instrument panel display 18 or a center console display 20, as described above with reference to FIG. 2. In the illustrated embodiment, the controller 30 is configured to receive a signal indicative of driver distraction, and to alter content presented by the graphical display 32 in response to receiving the signal. For example, the controller 30 may be configured to remove graphical elements and/or increase the font size of the displayed content. In certain embodiments, the display 32 may include a graph configured to present a value of a parameter (e.g., vehicle speed, fuel economy, coolant temperature, etc.) as a function of time. In such embodiments, the controller 30 may be configured to remove the graph and provide a numerical representation of an instantaneous value of the parameter in response to receiving a signal indicative of driver distraction. Consequently, the driver may identify the value more quickly, thereby enabling the driver to focus on the vehicle surroundings.

In further embodiments, the controller 30 may remove a numerical representation of a vehicle parameter and provide a symbol indicating whether the parameter is within a desired range in response to receiving a signal indicative of driver distraction. For example, the display 32 may present a numerical representation of coolant temperature, oil pressure, oil temperature and battery voltage. If driver distraction is detected, the controller 30 may remove the numerical representations and provide an icon indicating whether each parameter is within a desired range. For example, if the coolant temperature, oil pressure, oil temperature and battery voltage are within the desired range, the controller 30 may present respective green icons. However, if any parameter is outside of the desired range, the controller 30 may change the icon color to red, thereby alerting the driver to the detected condition. In further embodiments, the controller 30 may only present the icon if the parameter is outside of the detected range. In this configuration, the driver may identify the state of vehicle parameters more rapidly, thereby enabling the driver to focus on the vehicle surroundings.

In certain embodiments, the graphical display 32 may be configured to present only textual content to the driver. For example, the interface 28 may include a two-line dot matrix display configured to present static textual messages and/or scrolling textual messages. In such embodiments, the controller 30 is configured to alter content presented by the dot matrix display in response to receiving a signal indicative of driver distraction. By way of example, the dot matrix display may present information received from the Radio Broadcast Data System (RBDS), such as the artist and title of a song. If the number of characters in the title of the song is greater than the maximum number of displayable characters, the dot matrix display may scroll the text of the title to present the entire content to the driver. However, if the controller 30 detects that the driver is distracted (e.g., driver focus is directed toward the display for an excessive duration), the scrolling action may be paused, thereby directing driver focus toward the vehicle surroundings.

In further embodiments, the graphical display 32 may be a head-up display (HUD) configured to project content onto a windshield and/or other surfaces of the vehicle 10. In such embodiments, the controller 30 is configured to alter content presented by the HUD in response to receiving a signal indicative of driver distraction. For example, the controller 30 may be configured to remove graphical elements and/or increase the font size of the displayed content. In certain embodiments, the HUD may include a graph configured to present a value of a parameter (e.g., vehicle speed, fuel economy, coolant temperature, etc.) as a function of time. In such embodiments, the controller 30 may be configured to remove the graph and provide a numerical representation of an instantaneous value of the parameter in response to receiving a signal indicative of driver distraction. Consequently, the driver may identify the value more quickly, thereby enabling the driver to focus on the vehicle surroundings. Alternatively, the controller 30 may be configured to deactivate the HUD in response to receiving a signal indicative of driver distraction, thereby further enhancing driver focus on the vehicle surroundings.

In certain embodiments, the vehicle interface 28 may be configured to run various applications, and to display the output of such applications on the graphical display 32. For example, the graphical display 32 may enable a vehicle occupant to play games, access the internet, and/or run various internet-based programs. If driver distraction is detected, the controller 30 may temporarily disable the application, thereby enabling the driver to focus on the vehicle surroundings.

In addition, the interface 28 includes a voice prompt 34 communicatively coupled to the controller 30. Similar to the graphical display 32, the controller 30 is configured to alter content presented by the voice prompt 34 in response to receiving a signal indicative of driver distraction. For example, the voice prompt 34 may be configured to verbalize text messages received by a cellular phone. In such an embodiment, if the controller 30 detects that the driver is distracted, the voice prompt may only indicate that a text message has been received, instead of verbalizing the entire message. The shortened verbal response may enhance driver focus on the vehicle surroundings, thereby reducing driver distraction. As will be appreciated, additional verbal messages (e.g., driving directions, traffic reports, etc.) provided by the voice prompt 34 may be shortened to facilitate enhanced driver focus if a signal indicative of driver distraction is detected.

In the illustrated embodiment, a variety of sensors are communicatively coupled to the controller 30 to facilitate detection of driver distraction. Specifically, the illustrated vehicle interface 28 includes a lane departure sensor 36, a frontal collision warning/rear obstacle detection sensor 38, a driver head position/orientation sensor 39, a driver eye closure sensor 40, a driver eye position/pupil dilation sensor 42, a phone activation sensor 44, a speed sensor 46, and an interior noise sensor 48. The lane departure sensor 36 is configured to detect movement of the vehicle 10 outside of a designated lane. For example, the lane departure sensor 36 may include a camera configured to monitor the position of the vehicle 10 relative to left and right lane markings. If the vehicle 10 crosses one of the lane markings, the lane departure sensor 36 will send a signal to the controller 30 indicative of driver distraction. By way of example, if the driver is focused on the graphical display 32, the vehicle may inadvertently drift outside of the designated lane. Upon detection of lane departure, the controller 30 will alter content presented by the graphical display 32 (e.g., via reducing a level of content), thereby enabling the driver to focus on the vehicle surroundings. Once the vehicle has returned to the designated lane, the controller 30 will restore the original content presented by the display 32.

Similarly, the frontal collision warning/rear obstacle detection sensor 38 is configured to detect an object proximate to the vehicle 10. For example, the obstacle detection sensor 38 may include ultrasonic transducers, capacitance sensors, induction sensors, optical transducers and/or radio frequency transducers, among other sensors, configured to identify the position and/or velocity of an object relative to the vehicle 10. By way of example, if the driver is focused on the graphical display 32 during a backing maneuver, the vehicle may inadvertently approach a stationary object. Upon detection of the approaching object, the controller 30 will alter content presented by the graphical display 32 (e.g., via reducing a level of content), thereby enabling the driver to focus on the vehicle surroundings. Similarly, if the driver is focused on the graphical display 32 during a forward driving maneuver, the vehicle may inadvertently approach a slow-moving or stationary object. Upon detection of the approaching object, the controller 30 will alter content presented by the graphical display 32 (e.g., via reducing a level of content), thereby enabling the driver to focus on the vehicle surroundings.

In addition, the driver head position/orientation sensor 39 is configured to monitor head position via a capacitive sensor array, for example. In certain embodiments, the head position sensor 39 may be configured to detect large head motions, stillness, micronods (i.e., small repetitive head movements), and/or other anomalies, and to send a signal to the controller 30 indicative of driver fatigue. Moreover, the head position sensor 39 may send a signal to the controller 30 indicative of driver distraction if the sensor detects that the head is not forward-facing for a significant duration. If driver fatigue and/or distraction is detected, the controller 30 will alter content presented by the graphical display 32 (e.g., via reducing a level of content), thereby enabling the driver to focus on the vehicle surroundings.

Furthermore, the driver eye closure sensor 40 is configured to monitor the position of driver eyelids via an optical and/or infrared sensor, for example. In certain embodiments, the eye closure sensor 40 may be configured to determine the percentage of eye closure. For example, an eye closure of 80% may be indicative of driver fatigue. Consequently, if the eye closure sensor 40 detects significant eye closure (e.g., greater than 80%), the sensor will send a signal to the controller 30 indicative of driver distraction. In addition, the eye closure sensor 40 may be configured to detect a high blink rate and/or long duration blinks, which may be associated with driver fatigue. If a high blink rate and/or long duration blinks are detected, the sensor will send a signal to the controller 30 indicative of driver distraction. If the controller 30 receives a signal indicative of driver distraction from the driver eye closure sensor 40, the controller 30 will alter content presented by the graphical display 32 (e.g., via reducing a level of content), thereby enabling the driver to focus on the vehicle surroundings.

Similarly, the driver eye position/pupil dilation sensor 42 is configured to determine the orientation of the driver pupil relative to the vehicle interior 12 via an optical and/or infrared sensor, for example. Consequently, the sensor 42 will determine whether the driver is looking through the vehicle windshield or at the graphical display 32. If the driver is focused on the graphical display 32, or other component within the vehicle interior 12, for an excessive duration, the eye position sensor 42 will send a signal to the controller 30 indicative of driver distraction. If the controller 30 receives a signal indicative of driver distraction from the driver eye position sensor 42, the controller 30 will alter content presented by the graphical display 32 (e.g., via reducing a level of content), thereby prompting the driver to focus on the vehicle surroundings.

In addition, the driver eye position/pupil dilation sensor 42 may be configured to determine cognitive load by measuring pupil dilation. For example, if the driver is performing a visual perception task, such as monitoring high density traffic, the pupils may dilate slightly (e.g., by 0.5 mm). If such pupil dilation is detected, the pupil dilation sensor 42 will send a signal to the controller 30 indicative of driver distraction. The controller 30 will then alter content presented by the graphical display 32, thereby allowing the driver to focus on the cognitive task.

In addition, the phone activation sensor 44 is configured to detect operation of a phone within the vehicle interior 12. For example, the vehicle 10 may be configured to interface with a phone via a Bluetooth connection. In such an embodiment, the phone activation sensor 44 will detect operation of the phone, and send a signal to the controller 30 upon phone activation. The controller 30 will then alter content presented by the graphical display 32 (e.g., via reducing a level of content). For example, providing reduced content during periods of phone activation may enable the driver to maintain focus on the vehicle surroundings.

Furthermore, the speed sensor 46 is configured to detect erratic and/or excessive vehicle speeds. As will be appreciated, erratic vehicle speed may be indicative of driver distraction and/or high traffic density. In addition, it may be beneficial to direct driver attention to the vehicle surrounds when the vehicle is operating at high speeds. For example, in certain embodiments, the interface 28 may be communicatively coupled to a spatial locating device, such as a global positioning system (GPS), configured to determine the posted speed limit at the current vehicle location. In such embodiments, the controller 30 will identify excessive speeds if the current vehicle speed exceeds the posted speed limit by a threshold value (e.g., 5, 10, 15 miles per hour, or more). The controller 30 will then alter content presented by the graphical display 32 (e.g., via reducing a level of content) upon receiving a signal indicative of erratic and/or excessive vehicle speeds, thereby directing driver focus toward the vehicle surroundings.

The interior noise sensor 48 is configured to monitor the noise level within the vehicle interior. If the noise level exceeds a threshold volume (e.g., due to music, occupants, etc.), the sensor 46 will output a signal indicative of driver distraction to the controller 30. The controller 30, in turn, will alter content presented by the graphical display 32 (e.g., via reducing a level of content) to facilitate driver focus on the vehicle surroundings. While the illustrated vehicle interface 28 includes a lane departure sensor 36, an obstacle detection sensor 38, a driver head position sensor 39, a driver eye closure sensor 40, a driver eye position sensor 42, a phone activation sensor 44, a speed sensor 46, and an interior noise sensor 48, it should be appreciated that alternative embodiments may include more or fewer sensors configured to detect driver distraction. For example, certain embodiments may include a heart rate monitor configured to send a signal indicative of driver distraction if the driver heart rate exceeds a threshold value. The interface 28 may also include an accelerometer and/or a steering wheel position sensor, among other sensors, configured to detect driver distraction.

In the illustrated embodiment, the vehicle interface 28 includes a user interface 50 configured to selectively alter content presented by the graphical display 32 and/or the voice prompt 34. For example, a driver may elect to increase the font size of textural information presented by the graphical display 32 to enhance identification of vehicle parameters. In addition, a vehicle owner may lock the interface 28 into a reduced content mode for student drivers. For example, a parent may use the user interface 50 to lock the vehicle interface 28 into the reduced content mode before allowing a student driver to operate the vehicle 10. In such an embodiment, access to the user interface may be password protected, thereby preventing the student driver from increasing the level of content.

The illustrated vehicle interface 28 also includes a vehicle to vehicle (V2V) interface 51 and a vehicle to infrastructure (V2I) interface 53. The V2V and V2I interfaces are configured to facilitate communication of various external parameters, such as ambient speed, congestion, alternate routing, and/or intersection collision avoidance, to the driver. If the V2V interface 51 or V2I interface 53 detects a large quantity of information and/or important information being communicated to the driver, the interface will output a signal indicative of driver distraction to the controller 30. The controller 30, in turn, will alter content presented by the graphical display 32 (e.g., via reducing a level of content) to facilitate driver focus on the vehicle surroundings, and/or on the communications from the interface.

In the illustrated embodiment, the vehicle interface 28 is communicatively coupled to a traction control/electronic stability control system 52. As will be appreciated, the electronic stability control system 52 is configured to substantially reduce wheel spin during acceleration and/or steering maneuvers. If the electronic stability control system 52 is activated (e.g., while the vehicle is traveling along a slippery road), the electronic stability control system will send a signal to the controller 30 indicative of driver distraction. The controller 30, in turn, will alter content presented by the graphical display 32 and/or the voice prompt 34, thereby enabling the driver to focus on the reduced traction condition. Furthermore, the illustrated controller 30 is communicatively coupled to an internet connection 54. In certain embodiments, the internet connection 54 is configured to determine weather conditions and/or traffic density at the current vehicle location. If inclement weather and/or a high traffic density is detected, the controller 30 may alter content to facilitate driver focus on the detected traffic and/or weather conditions.

In the illustrated embodiment, an alarm 56 is also communicatively coupled to the controller 30. The controller 30 is configured to activate the alarm 56 in response to receiving the signal indicative of driver distraction. In certain embodiments, the alarm may be an audible alarm and/or a visual alarm. For example, if the controller 30 detects that the driver is distracted (e.g., via one of the sensors), the controller 30 will activate the alarm 56 to focus driver attention on the vehicle surroundings. By way of example, if the driver eye position sensor 42 determines that the driver is looking at the graphical display 32 for an excessive duration, the controller 30 will activate the alarm 56 and reduce the level of content presented by the graphical display 32. Consequently, the driver will be prompted to look at the roadway, while being presented with less content on the display 32.

In certain embodiments, the vehicle interface 28 is configured to communicate with a portable electronic device (e.g., a cell phone, a tablet computer, a laptop computer, a portable music player, etc.) located within the vehicle interior 12. In such embodiments, the vehicle interface 28 includes a device interface 55 configured to communicate with the portable electronic device 57 via a wired or wireless connection, such as a universal serial bus (USB) connection, a WiFi connection, or a Bluetooth connection. In the illustrated embodiment, the portable electronic device 57 includes a graphical display 59 configured to present information to a user. If the driver is viewing the graphical display 59 while operating the vehicle 10, the complexity of the graphical content presented by the display 59 may direct driver focus away from the vehicle surroundings. Accordingly, the controller 30 is configured to alter content presented by the graphical display 59 in response to receiving a signal indicative of driver distraction. For example, if the driver eye position sensor 42 determines that the driver is looking at the graphical display 59 for an excessive duration, the controller 30 will instruct the portable electronic device 57 (e.g., via the device interface 55) to reduce the level of content presented by the graphical display 59. As a result, information may be conveyed to the driver in a more concise/simplistic manner, thereby reducing driver focus on the display 59 and/or directing driver attention toward the vehicle surroundings. While driver eye position monitoring is described above, it should be appreciated that the controller 30 may also be configured to instruct the portable electronic device 57 to reduce the level of content presented by the display 59 upon detection of lane departure, an obstacle in the path of the vehicle, driver eye closure, phone activation, erratic speed, and/or excessive interior noise.

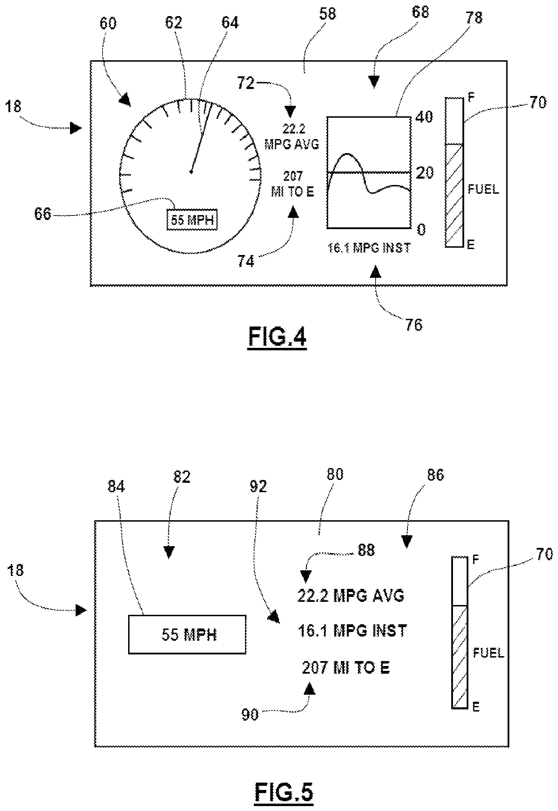

FIG. 4 is a front view of an exemplary graphical display, presenting a first layout having a first content level. In the illustrated embodiment, the graphical display represents an instrument panel display 18 configured to present vehicle operating information to a driver. As illustrated, the instrument panel display 18 includes a first layout 58 having various graphical elements. Specifically, the display 18 includes a graphical representation of a speedometer 60 configured to graphically represent vehicle speed. As illustrated, the speedometer 60 includes a gauge 62 and an indicator 64 configured to represent vehicle speed in a manner similar to an electromechanical gauge. The speedometer 60 also includes a digital readout 66 configured to present a numerical representation of vehicle speed. Such a speedometer configuration will effectively present vehicle speed information to a driver, while providing a desirable appearance.

The first layout 58 also includes a fuel information section 68 having a variety of graphical and numerical representations of fuel quantity and usage information. As illustrated, the fuel information section 68 includes a fuel gauge 70 configured to graphically represent available fuel quantity. In addition, the fuel information section 68 includes a first digital readout 72 configured to present a numerical representation of average fuel efficiency in miles per gallon (MPG AVG), a second digital readout 74 configured to present anticipated range in miles (MI TO E), and a third digital readout 76 configured to present a numerical representation of instantaneous fuel efficiency (MPG INST). The fuel information section 68 also includes a graph 78 representative of fuel efficiency as a function of time. The graph 78 may enable a driver to visually associate driving habits with fuel economy, thereby facilitating enhanced fuel efficiency. The illustrated fuel information section 68 effectively presents vehicle fuel quantity and usage information to a driver, while providing a desirable appearance.

FIG. 5 is a front view of the graphical display of FIG. 4, presenting a second layout having a second content level, less than the first content level. For example, if the controller receives a signal indicative of driver distraction, the controller will alter content presented by the display. In the illustrated embodiment, the instrument panel display 18 will present a second layout 80 having less content than the first layout 58. As a result, information will be conveyed to the driver more quickly, thereby enabling the driver to focus on the vehicle surroundings (e.g., road conditions, approaching obstacles, vehicular traffic, etc.). In the illustrated embodiment, graphical elements of the content have been removed and the font size of display text has been increased in response to detected driver distraction. Specifically, the second layout 80 includes an alternative speedometer 82 having a digital readout 84 configured to present a numerical representation of vehicle speed. As illustrated, the font size of the digital readout 84 is larger than the font size of the digital readout 66 in the first layout 58. In addition, the gauge 62 and indicator 64 have been omitted. Consequently, the driver may be able to determine vehicle speed more quickly, thereby enabling the driver to focus on the vehicle surroundings.

In addition, the second layout 80 includes a simplified fuel information section 86. As illustrated, the graph 78 of the first layout 58 has been omitted, and the font size of the digital readouts has been increased. Specifically, the fuel information section 86 includes a first digital readout 88 configured to present a numerical representation of average fuel efficiency in miles per gallon (MPG AVG), a second digital readout 90 configured to present anticipated range in miles (MI TO E), and a third digital readout 92 configured to present a numerical representation of instantaneous fuel efficiency (MPG INST). Because the font size of each digital readout has been increased, the presented values may be identified more rapidly, thereby enabling the driver to focus on road conditions. However, it should be noted that the second layout 80 presents the same information to the driver as the first layout 58. Specifically, the second layout 80 includes values indicative of vehicle speed, average efficiency, instantaneous fuel efficiency and anticipated range. However, with the graphical elements removed, the information is presented in a more concise/simplified manner, thereby enabling the driver to read the displays in less time.

While vehicle speed and fuel information are included in the illustrated instrument panel display, it should be appreciated that alternative displays may include more or fewer graphical and/or textual elements. For example, certain displays may include graphical and/or numerical representations of engine rotation rate, coolant temperature, oil temperature, oil pressure, battery voltage and/or other parameters associated with vehicle operation. In such embodiments, the controller may be configured to reduce the level of content presented on the display to facilitate driver focus on the vehicle surroundings.

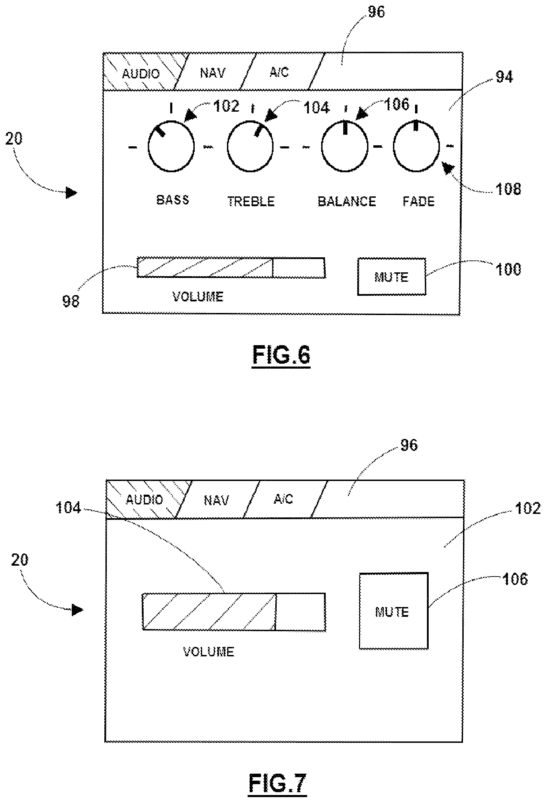

FIG. 6 is a front view of an alternative graphical display, presenting a first layout having a first content level. In the illustrated embodiment, the graphical display represents a center console display 20 configured to present audio functions, navigation information, and environmental controls to a driver. As illustrated, the center console display 20 includes a first layout 94 having various graphical elements. Specifically, the display 20 includes a menu bar configured to facilitate selection of an audio control screen (AUDIO), a navigation control screen (NAV), and an environmental control screen (A/C). As illustrated, the audio control screen is currently selected, thereby displaying graphical elements related to audio control features. In the illustrated embodiment, the first layout 94 includes a graphical volume indicator 98, a mute indicator 100, a graphical representation of a bass adjustment knob 102, a graphical representation of a treble adjustment knob 104, a graphical representation of a balance adjustment knob 106, and a graphical representation of a fade adjustment knob 108. In certain embodiments, the center console display 20 may include a touch screen interface, thereby enabling the driver to adjust the audio controls via the graphical elements of the display. Such an audio control arrangement will effectively present audio configuration information to a driver, while providing a desirable appearance.

FIG. 7 is a front view of the graphical display of FIG. 6, presenting a second layout having a second content level, less than the first content level. For example, if the controller receives a signal indicative of driver distraction, the controller will alter content presented by the display. In the illustrated embodiment, the center console display 20 will present a second layout 102 having less content than the first layout 94. As a result, information will be conveyed to the driver more quickly, thereby enabling the driver to focus on the vehicle surroundings (e.g., road conditions, approaching obstacles, vehicular traffic, etc.). In the illustrated embodiment, the graphical representations of the bass knob, treble knob, balance knob and fade knob have been omitted. In addition, the size of the volume indicator 104 and the mute indicator 106 have been increased. Consequently, the driver may be able to determine the volume level more quickly, thereby enabling the driver to focus on the vehicle surroundings. In addition, in embodiments having a touch screen interface, the larger indicators 104 and 106 may enable the driver to adjust the volume and/or mute the audio system more rapidly, thereby facilitating increased driver concentration on the vehicle surroundings.

While an audio control screen is described above, it should be appreciated that the controller may be configured to alter content presented on a navigation control screen, an environmental control screen and/or other screens available on the center console display in response to detected driver distraction. Furthermore, it should be appreciated that other graphical indicators/controls (e.g., graphic equalizer, audio mode selector, speed sensitive volume control, etc.) may be included on the audio control screen in alternative embodiments. In addition, it should be appreciated that additional displays may be located throughout the vehicle interior. In such embodiments, the controller may be communicatively coupled to each display and configured to alter content presented on the display in response to detected driver distraction.

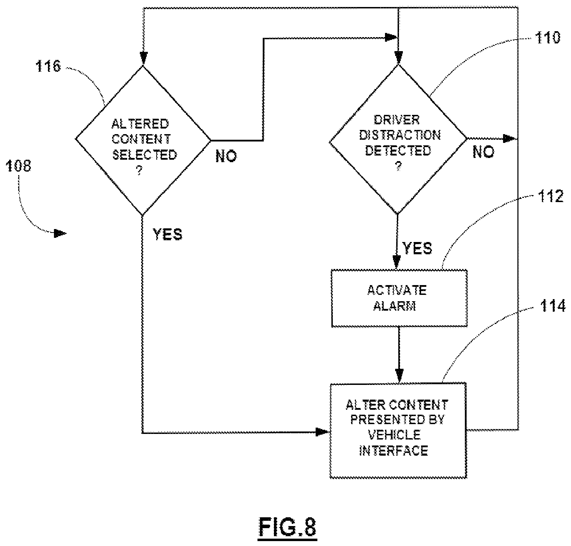

FIG. 8 is a flow diagram of an exemplary method 108 of operating a vehicle interface. First as represented by block 110, signals from a variety of sensors are monitored to detect driver distraction. For example, a controller may monitor signals from a lane departure sensor, an obstacle detection sensor, a driver head position sensor, a driver eye closure sensor, a driver eye position sensor, a phone activation sensor and/or an interior noise sensor to determine whether the driver is distracted. If driver distraction is detected, an alarm will activate, as represented by block 112. As previously discussed, the alarm may be an audible and/or visual alarm configured to direct driver focus to the vehicle surroundings. In addition, if driver distraction is detected, content presented by the vehicle interface will be altered, as represented by block 114. For example, graphical elements of displayed content may be removed and/or voice prompts may be shortened, thereby enabling the driver to identify the value of parameters more quickly. Furthermore, content presented by the vehicle interface will be altered if an altered content is selected (e.g., via a user interface), as represented by block 116. For example, a parent may lock the vehicle interface into a reduced content mode before allowing a child to operate the vehicle.

## Claims

1. A vehicle interface, comprising:
a sensor configured to monitor a driver and to output a signal indicative of driver distraction;
**characterized by**
a controller configured to determine whether the driver is distracted based on the signal and to selectively reduce content presented by the vehicle interface from a first level of content to a second level of content, less than the first level of content, while the driver is distracted, wherein the second level of content includes at least one element of content.

2. The vehicle interface of claim 1, wherein the vehicle interface comprises a graphical display.

3. The vehicle interface of claim 2, wherein the controller is configured to increase a font size of textual content presented by the graphical display while the driver is distracted.

4. The vehicle interface of claim 2, wherein the controller is configured to selectively reduce content presented by the graphical display from the first level of content to the second level of content via removal of at least one graphical element of the first level of content.

5. The vehicle interface of claim 1, wherein the vehicle interface comprises a voice prompt.

6. The vehicle interface of claim 1, wherein the sensor comprises a driver eye closure sensor or a driver eye position sensor.

7. The vehicle interface of claim 1, wherein the controller is configured to selectively reduce content presented by the vehicle interface from the first level of content to the second level of content in response to user input.

8. The vehicle interface of claim 7, wherein the controller is configured to maintain the second level of content until a password is provided.

9. The vehicle interface of claim 1, wherein the controller is configured to selectively reduce content presented by the vehicle interface from the first level of content to the second level of content in response to a signal indicative of inclement weather, reduced vehicle traction, or a combination thereof.

10. The vehicle interface of claim 1, wherein the controller is configured to restore content presented by the vehicle interface to the first level of content while the driver is not distracted.

11. The vehicle interface of claim 2, wherein
the controller is configured to present a first layout on the graphical display having the first level of content while the driver is not distracted, and to present a second layout on the graphical display having the second level of content, less than the first level of content, while the driver is distracted, wherein the second level of content includes at least a portion of the first level of content.

12. The vehicle interface of claim 11, comprising a voice prompt, wherein the controller is configured to selectively reduce a level of content of the voice prompt while the driver is distracted.

13. A method of operating a vehicle interface, comprising:
receiving a signal indicative of driver distraction from a sensor configured to monitor a driver;
**characterized by**
determining whether the driver is distracted based on the signal; and
selectively reducing content presented by the vehicle interface from a first level of content to a second level of content, less than the first level of content, while the driver is distracted, wherein the second level of content includes at least one element of content.

14. The method of claim 13, comprising activating an alarm while the driver is distracted.

15. The method of claim 13, wherein selectively reducing content presented by the vehicle interface from the first level of content to the second level of content comprises selectively reducing content presented by a graphical display via removal of at least one graphical element of the content, reducing content of a voice prompt, or a combination thereof.

## Patentansprüche

1. Fahrzeugschnittstelle, die Folgendes umfasst:
einen Sensor, der konfiguriert ist, einen Fahrer zu überwachen und ein Signal auszugeben, das eine Ablenkung des Fahrers angibt;
**gekennzeichnet durch**
eine Steuereinheit, die konfiguriert ist, anhand des Signals zu bestimmen, ob der Fahrer abgelenkt ist, und wahlweise einen durch die Fahrzeugschnittstelle dargestellten Inhalt von einem ersten Ausmaß des Inhalts auf ein zweites Ausmaß des Inhalts, das kleiner als das erste Ausmaß des Inhalts ist, zu reduzieren, solange der Fahrer abgelenkt ist, wobei das zweite Ausmaß des Inhalts mindestens ein Element des Inhalts enthält.

2. Fahrzeugschnittstelle nach Anspruch 1, wobei die Fahrzeugschnittstelle eine graphische Anzeige umfasst.

3. Fahrzeugschnittstelle nach Anspruch 2, wobei die Steuereinheit konfiguriert ist, eine Schriftgröße von durch die graphische Anzeige dargestelltem Textinhalt, zu vergrößern, solange der Fahrer abgelenkt ist.

4. Fahrzeugschnittstelle nach Anspruch 2, wobei die Steuereinheit konfiguriert ist, den durch die graphische Anzeige dargestellten Inhalt von dem ersten Ausmaß des Inhalts auf das zweite Ausmaß des Inhalts über ein Entfernen mindestens eines graphischen Elements des ersten Ausmaßes des Inhalts zu reduzieren.

5. Fahrzeugschnittstelle nach Anspruch 1, wobei die Fahrzeugschnittstelle eine Sprachaufforderung umfasst.

6. Fahrzeugschnittstelle nach Anspruch 1, wobei der Sensor einen Sensor für das Schließen des Auges des Fahrers oder einen Sensor für die Position des Auges des Fahrers umfasst.

7. Fahrzeugschnittstelle nach Anspruch 1, wobei die Steuereinheit konfiguriert ist, wahlweise den durch die Fahrzeugschnittstelle dargestellten Inhalt als Reaktion auf eine Anwendereingabe von dem ersten Ausmaß des Inhalts auf das zweite Ausmaß des Inhalts zu reduzieren.

8. Fahrzeugschnittstelle nach Anspruch 7, wobei die Steuereinheit konfiguriert ist, das zweite Ausmaß des Inhalts beizubehalten, bis ein Passwort geliefert wird.

9. Fahrzeugschnittstelle nach Anspruch 1, wobei die Steuereinheit konfiguriert ist, wahlweise den durch die Fahrzeugschnittstelle dargestellten Inhalt als Reaktion auf ein Signal, das ein raues Wetter, einen reduzierten Fahrzeugantrieb oder eine Kombination davon angibt, von dem ersten Ausmaß des Inhalts auf das zweite Ausmaß des Inhalts zu reduzieren.

10. Fahrzeugschnittstelle nach Anspruch 1, wobei die Steuereinheit konfiguriert ist, den durch die Fahrzeugschnittstelle dargestellten Inhalt auf das erste Ausmaß des Inhalts zurückzusetzen, solange der Fahrer nicht abgelenkt ist.

11. Fahrzeugschnittstelle nach Anspruch 2, wobei
die Steuereinheit konfiguriert ist, ein erstes Layout auf der graphischen Anzeige darzustellen, das das erste Ausmaß des Inhalts besitzt, solange der Fahrer nicht abgelenkt ist, und ein zweites Layout auf der graphischen Anzeige darzustellen, das das zweite Ausmaß des Inhalts, das kleiner als das erste Ausmaß des Inhalts ist, besitzt, solange der Fahrer abgelenkt ist, wobei das zweite Ausmaß des Inhalts mindestens einen Teil des ersten Ausmaßes des Inhalts enthält.

12. Fahrzeugschnittstelle nach Anspruch 11, die eine Sprachaufforderung umfasst, wobei die Steuereinheit konfiguriert ist, wahlweise ein Ausmaß des Inhalts der Sprachaufforderung zu reduzieren, solange der Fahrer abgelenkt ist.

13. Verfahren zum Betreiben einer Fahrzeugschnittstelle, das Folgendes umfasst:
Empfangen eines Signals, das eine Ablenkung des Fahrers angibt, von einem Sensor der konfiguriert ist, einen Fahrer zu überwachen;
**gekennzeichnet durch**:
Bestimmen anhand des Signals, ob der Fahrer abgelenkt ist; und
wahlweise Reduzieren des durch die Fahrzeugschnittstelle dargestellten Inhalts von einem ersten Ausmaß des Inhalts auf ein zweites Ausmaß des Inhalts, das kleiner als das erste Ausmaß des Inhalts ist, solange der Fahrer abgelenkt ist, wobei das zweite Ausmaß des Inhalts mindestens ein Element des Inhalts enthält.

14. Verfahren nach Anspruch 13, das umfasst, einen Alarm zu aktivieren, solange der Fahrer abgelenkt ist.

15. Verfahren nach Anspruch 13, wobei das wahlweise Reduzieren des durch die Fahrzeugschnittstelle dargestellten Inhalts von dem ersten Ausmaß des Inhalts auf das zweite Ausmaß des Inhalts umfasst, wahlweise den durch eine graphische Anzeige dargestellten Inhalt über ein Entfernen mindestens eines graphischen Elements des Inhalts zu reduzieren, den Inhalt einer Sprachaufforderung zu reduzieren oder eine Kombination davon.

## Revendications

1. Interface de véhicule, comprenant :
un capteur configuré pour surveiller un conducteur et pour délivrer un signal indiquant que le conducteur est distrait ;
**caractérisé par**
un contrôleur configuré pour déterminer si le conducteur est distrait sur la base du signal et pour réduire sélectivement le contenu présenté par l'interface de véhicule d'un premier niveau de contenu à un deuxième niveau de contenu, inférieur au premier niveau de contenu, quand le conducteur est distrait, le deuxième niveau de contenu comportant au moins un élément de contenu.

2. Interface de véhicule de la revendication 1, l'interface de véhicule comprenant un afficheur graphique.

3. Interface de véhicule de la revendication 2, dans laquelle le contrôleur est configuré pour augmenter une taille de police de contenu textuel présenté par l'afficheur graphique quand le conducteur est distrait.

4. Interface de véhicule de la revendication 2, dans laquelle le contrôleur est configuré pour réduire sélectivement le contenu présenté par l'afficheur graphique du premier niveau de contenu au deuxième niveau de contenu en retirant au moins un élément graphique du premier niveau de contenu.

5. Interface de véhicule de la revendication 1, l'interface de véhicule comprenant une invite vocale.

6. Interface de véhicule de la revendication 1, dans laquelle le capteur comprend un capteur de fermeture des yeux du conducteur ou un capteur de position des yeux du conducteur.

7. Interface de véhicule de la revendication 1, dans laquelle le contrôleur est configuré pour réduire sélectivement le contenu présenté par l'interface de véhicule du premier niveau de contenu au deuxième niveau de contenu en réponse à une saisie utilisateur.

8. Interface de véhicule de la revendication 7, dans laquelle le contrôleur est configuré pour maintenir le deuxième niveau de contenu jusqu'à ce qu'un mot de passe soit fourni.

9. Interface de véhicule de la revendication 1, dans laquelle le contrôleur est configuré pour réduire sélectivement le contenu présenté par l'interface de véhicule du premier niveau de contenu au deuxième niveau de contenu en réponse à un signal indiquant des intempéries, une réduction de la traction du véhicule, ou une combinaison de celles-ci.

10. Interface de véhicule de la revendication 1, dans laquelle le contrôleur est configuré pour restaurer le contenu présenté par l'interface de véhicule au premier niveau de contenu quand le conducteur n'est pas distrait.

11. Interface de véhicule de la revendication 2, dans laquelle
le contrôleur est configuré pour présenter une première disposition sur l'afficheur graphique ayant le premier niveau de contenu quand le conducteur n'est pas distrait, et pour présenter une deuxième disposition sur l'afficheur graphique ayant le deuxième niveau de contenu, inférieur au premier niveau de contenu, quand le conducteur est distrait, le deuxième niveau de contenu comportant au moins une partie du premier niveau de contenu.

12. Interface de véhicule de la revendication 11, comprenant une invite vocale, le contrôleur étant configuré pour réduire sélectivement un niveau de contenu de l'invite vocale quand le conducteur est distrait.

13. Procédé de fonctionnement d'une interface de véhicule, comprenant l'étape consistant à :
recevoir un signal indiquant que le conducteur est distrait depuis un capteur configuré pour surveiller un conducteur ;
**caractérisé par** les étapes consistant à
déterminer si le conducteur est distrait sur la base du signal ; et
réduire sélectivement le contenu présenté par l'interface de véhicule d'un premier niveau de contenu à un deuxième niveau de contenu, inférieur au premier niveau de contenu, quand le conducteur est distrait, le deuxième niveau de contenu comportant au moins un élément de contenu.

14. Procédé de la revendication 13, comprenant l'activation d'une alarme quand le conducteur est distrait.

15. Procédé de la revendication 13, dans lequel la réduction sélective du contenu présenté par l'interface de véhicule du premier niveau de contenu au deuxième niveau de contenu comprend la réduction sélective du contenu présenté par un afficheur graphique par retrait d'au moins un élément graphique du contenu, réduction du contenu d'une invite vocale, ou une combinaison de celles-ci.
